# EUROPEAN PATENT APPLICATION

(11) **EP 0 930 747 A1**
(43) Date of publication of application: **21.07.1999**
(21) Application number: 99250019.9
(22) Date of filing: 20.01.1999
(51) Int. Cl.: H04L 12/24

(54) **IEEE 1394 Serial bus system using a mapping table for identifying nodes having required capabilities to establish isochronous connections**

(30) Priority: 20.01.1998 JP 2160198
(71) Applicant: NEC CORPORATION, Tokyo (JP)
(72) Inventor: Saito, Tomoki, Minato-ku, Tokyo (JP)
(74) Representative: Patentanwälte Wenzel & Kalkoff

(57) **Abstract**

In an IEEE-1394 serial bus system, a controlling node reads information from the configuration ROM of each of other nodes attached to the bus and establishes in a mapping table a correspondence between the identifier of each node and the read information. The controlling node identifies particular nodes having required capabilities according to the information stored in the mapping table and requests an isochronous resource manager to obtain information necessary for transmission of isochronous data. The obtained information is then set into plug control registers of the identified nodes to establish a connection between the identified nodes.

## Description

### BACKGROUND OF THE INVENTION

### Field of the Invention

The present invention relates generally to IEEE 1394 serial bus systems and more specifically to an IEEE 1394 node capable of establishing connections for isochronous transmissions.

### Description of the Related Art

The IEEE-1394 Standard for a High Performance Serial Bus specifies a sequence of different processes to be performed when the bus is initialized. One of such processes is the self identification process in which all nodes attached to the bus are informed of the node identifiers of all other nodes and the maximum speed of each bus segment that is attached between two nodes. However, if it is desired to transfer isochronous data such as video programs between two nodes of particular vendors, details of node information such as node capabilities and their node type are still required in order to identify the nodes supporting isochronous transmission before establishing a connection.

### SUMMARY OF THE INVENTION

It is therefore an object of the present invention to identify nodes having required node capabilities for isochronous transmission and establish a connection between the identified nodes.

According to the present invention, there is provided an IEEE-1394 serial bus system in which a plurality of nodes are attached to the serial bus, each of the nodes including a configuration ROM and identified by a node identifier. At least one of the nodes comprises a mapping table and control circuitry for reading information from the configuration ROM of each of other nodes and mapping the identifier of each other node to the read information in the mapping table, identifying a node having required node capabilities according to information scored in the mapping table, requesting an isochronous resource manager to obtain information necessary for transmission of isochronous data, and setting the obtained information into the identified node to establish a connection which supports said transmission.

### BRIEF DESCRIPTION OF THE DRAWINGS

The present invention will be described in further detail with reference to the accompanying drawings, in which:
Fig. 1 shows in block diagram form an IEEE 1394 serial bus tree topology network according to the present invention;
Fig. 2 shows details of a configuration ROM of each node of the tree topology network;

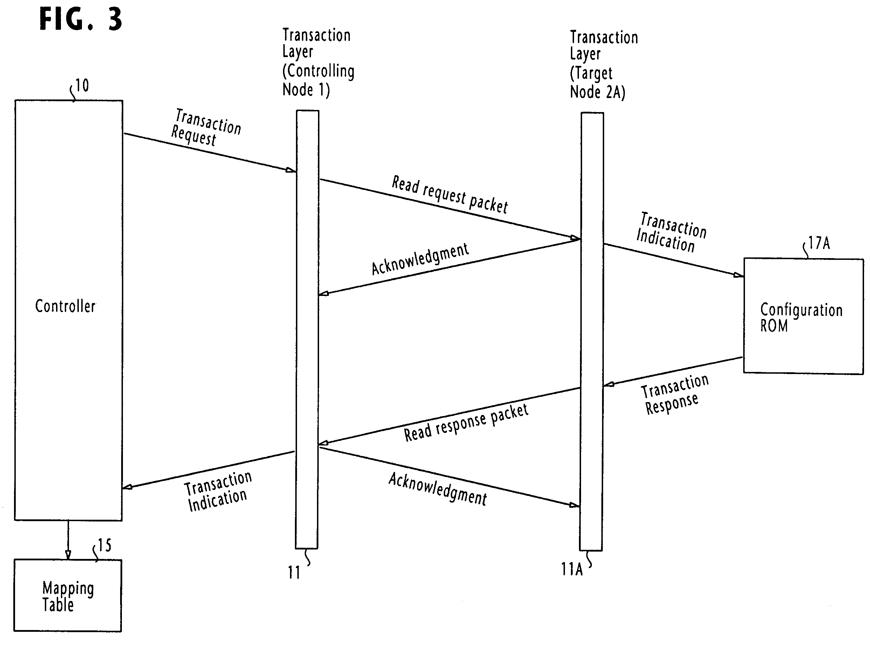

Fig. 3 shows a table mapping process of the present invention at the level of transaction layer;
Figs. 4A to 4D show in flow diagram form the table mapping process of a controlling node;
Figs. 5A to 5D show the formats of packets used in the present invention;
Fig. 6 shows in flow diagram form the operation of the connection establishment process of the controlling node;
Fig. 7 shows information set in plug control registers of audio/visual nodes; and
Fig. 8 shows one sample of connections established among audio/visual nodes of the IEEE 1394 tree topology network.

### DETAILED DESCRIPTION

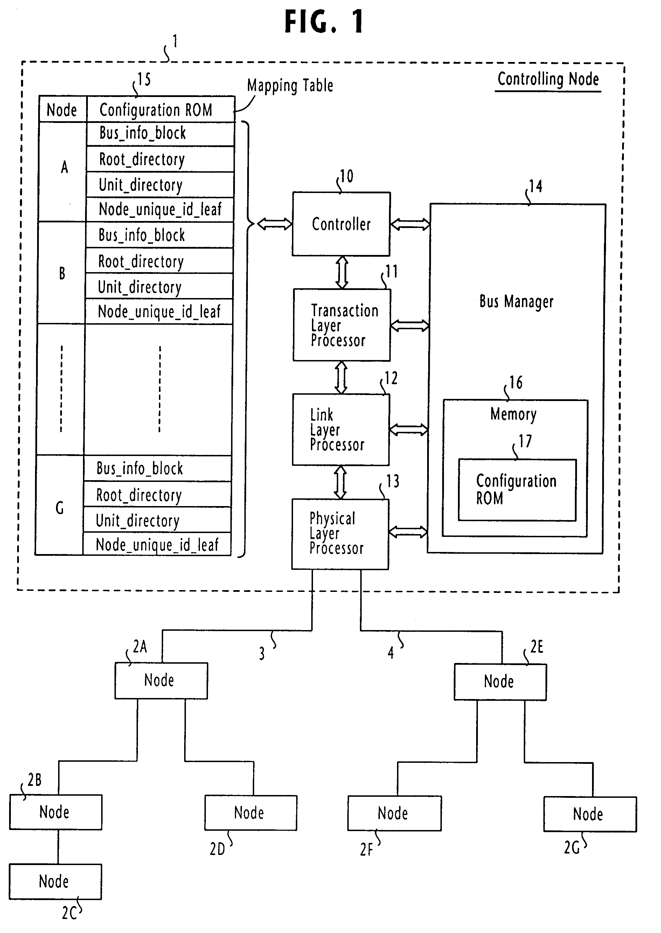

Referring now to Fig. 1, there is shown an IEEE 1394 serial bus tree-topology network according to the present invention. The network is comprised of a plurality of IEEE 1394 devices, or nodes. One of the nodes is a controlling node 1 and the other nodes are controlled nodes, or target nodes 2A to 2G attached to the controlling node by local buses 3 and 4 in a tree-like topology. Nodes 1 and 2 may be audio/visual devices or personal computers, or computer peripheral devices, all of which are designed to the IEEE Standard for a High Performance Serial Bus (or IEEE Std 1394-1995) which supports both asynchronous and isochronous transmissions, simultaneously.

Controlling node 1 includes a controller 10, a transaction layer processor 11, a link layer processor 12 and a physical layer processor 13, all of which are connected to a bus manager 14. By way of the processors 11 to 13, the controller 10 transmits and receives signals to and from the local buses 3 and 4. Further associated with the controller 10 is a mapping table 15 in which the controller 10 maps node identifiers to the corresponding device information items obtained from the configuration ROM of target nodes in a manner as will be described in detail later.

A memory 16 is provided within the bus manager 14 and a configuration ROM 17 is defined within the memory 16. Each of target nodes 2A to 2G has its own configuration ROM.

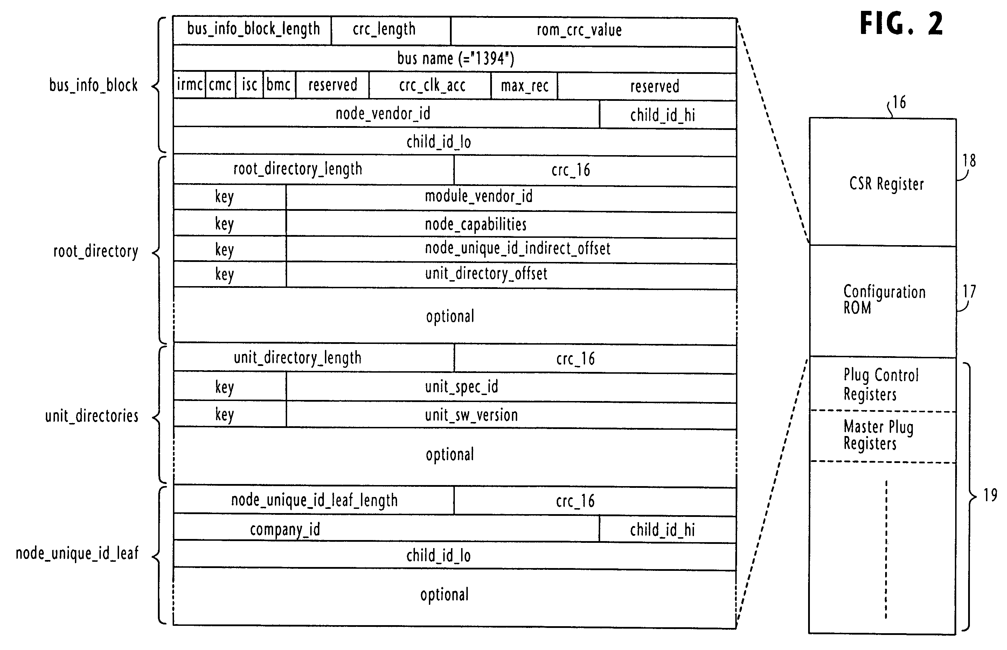

As shown in detail in Fig. 2, the memory 16 of the controlling node as well as target nodes 2A to 2G is partitioned into a plurality of register spaces including the space for the configuration ROM 17, a space for CSR (control and status register) 18, and initial units space 19. Bus manager 14 controls the layers 11, 12 and 13 according to the contents of the CSR memory space 18. After the mapping table 15 is completed, the controller 10 exchanges command messages with other nodes using addresses specified in the CSR memory space 18.

Configuration ROM 17 is divided into a number of storage locations each with a 32-bit (quadlet) wide memory space. These quadlet storage locations are grouped into sections such as bus_info_block, root_directory, unit_directories and a node_unique_id_leaves, and each section begins with a memory space in which the data length of the section and error check data are indicated.

Audio/visual nodes are provided with master plug registers and plug control registers designed to the IEC standard 61883 for digital interface for consumer electronic audio/video equipment (reference number 100C/46 ∼ 50/CVD, project number 100C/61883-1∼5/Ed.1). A maximum of thirty-two plug control registers are provided in each of the target nodes 2. In each of these plug control registers are stored information relating to the presence/absence of broadcast connection, the number of point-to-point connections, the identification of an isochronous channel and the transfer rate and bandwidth of the isochronous channel. Management of the plug control registers is provided by the master plug registers. Plug control registers and master plug registers is defined within the initial units space 19 as illustrated in Fig. 2.

Controlling node 1 begins its operation with a bus initialization process by asserting a bus reset on local buses 3 and 4. Following the bus initialization, a tree identification process begins to identify the root node and the isochronous resource manager and the topology of all attached nodes, resulting in all ports of the nodes being designated as either child or parent ports. A child port connects to a node further away from the root, while a parent port connects to a node closer to the root. The tree identification process is then followed by a self identification process during which a physical identification is assigned to each node, neighboring nodes exchange their speed capabilities and the topology defined during tree identification.

Following the self identification process, the controller 10 performs a mapping process on the table 15. The cable mapping process of controller 10 begins at the transaction layer with a target node, 2A, for example, to establish correspondences in the mapping table 15 between the identifier of the node 2A and a number of its unique device information items. As illustrated, the controller 10 at node 1 sends a transaction request to its transaction layer 11 to forward a read request packet to the transaction layer 11A of node 2A, which replies with an acknowledgment packet and sends a transaction indication to its configuration ROM 17A. This results in a desired data item being read out of the configuration ROM 17A and transmitted as a transaction response to the transaction layer 11A. The configuration ROM data is placed in the data field of a read response packet and sent from the transaction layer 11A to the transaction layer 11, which returns an acknowledgment packet to node 2A and sends a transaction indication to the controller 10. The configuration ROM data of node 2A contained in the transaction indication is mapped in the mapping table 15 to the identifier of node 2A.

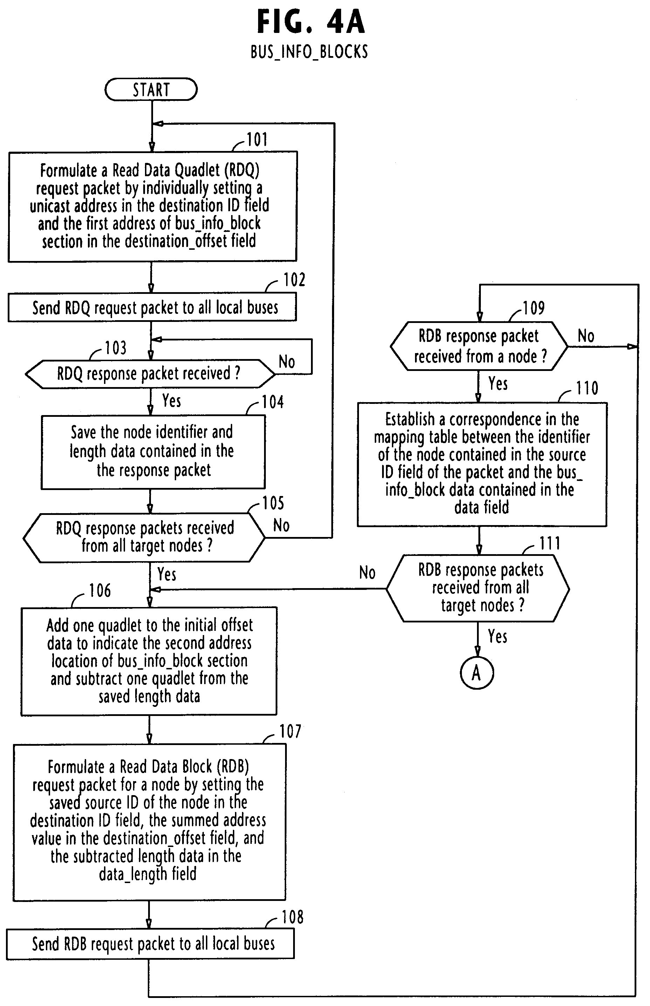

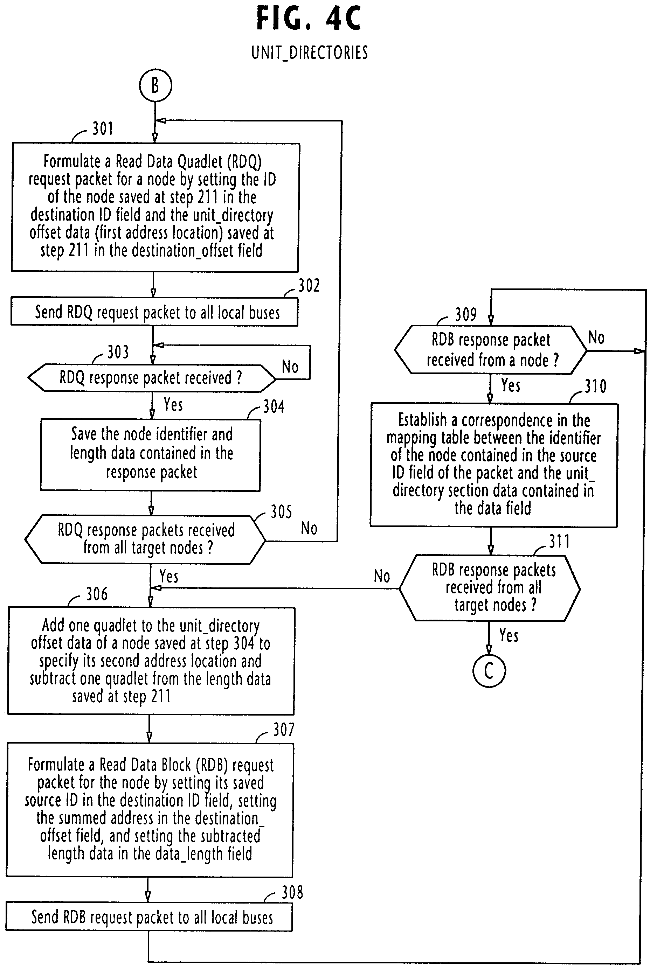

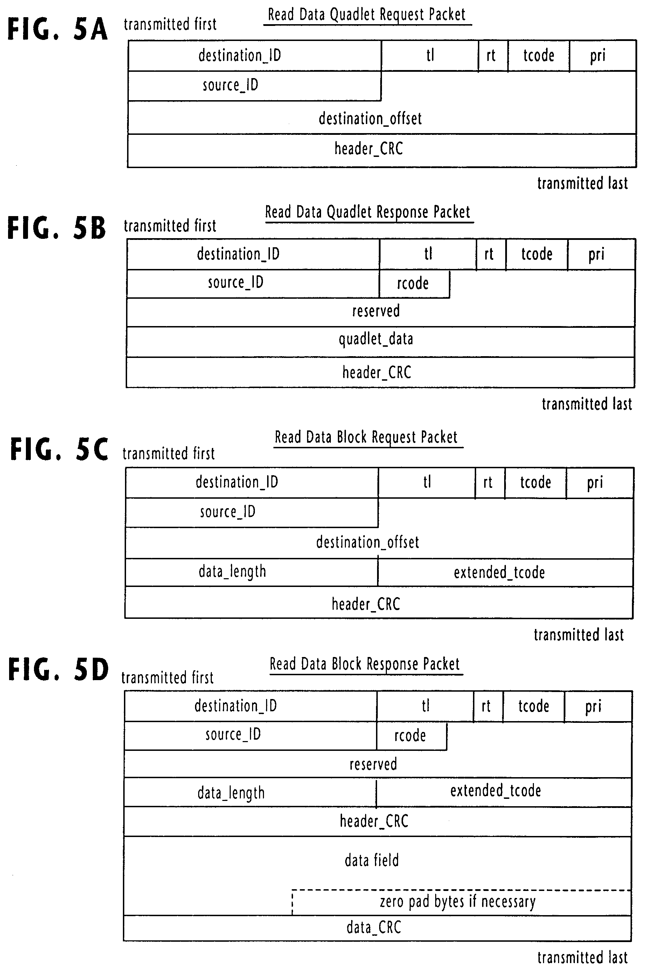

The following is a detailed description of the table mapping operation of controller 10 with the aide of the flowcharts of Figs. 4A to 4D by using the standardized packets as shown in Figs. 5A to 5D.

The table mapping process begins with the reading of bus_into_block section data from all target nodes. At step 101, the controller 10 formulates a Read Data Quadlet (RDQ) unicast request packet (Fig. 5A) by setting 3FF₁₆ (=1023) in the ten most significant bits of the destination ID field to specify all local buses and setting one of 0₁₆ to 3E₁₆ in the six least significant bits and an address (FFFFF0000400₁₆) in the destination_offset field indicating the first quadlet data of bus_info_block section. In this way, RDQ unicast packets can be individually addressed to a maximum of sixty-three target nodes.

All nodes recognizing a receipt of the RDQ request packet know that they are being targeted and respond with a RDQ response packet which is shown in Fig. 5B. More specifically, each target node reads the first quadlet (four bytes) data of bus_info_block section of its configuration ROM as specified by the destination_offset field of the received packet and inserts this first quadlet data into the quadlet_data field of the RDQ response packet as well as the node ID of the target node into its source_ID field. This first quadlet data includes the data length of the bus_info_block section and CRC information (see Fig. 2).

In response to receipt of the RDQ response packet from each target node (step 103), the controller 10 proceeds to step 104 to save the source address contained in its source_ID field and reads the length data of bus_info_block section from the quadlet data field.

At step 105, the controller 10 checks to see if RDQ response packets are received from all target nodes. If not, flow returns to step 101 to repeat the process until RDQ response packets are received from all target nodes.

When the decision at step 105 becomes affirmative, flow proceeds to step 106 to add one quadlet to the initial offset data to produce a summed address value FFFFF0000404₁₆ which indicates the second address location of the bus_info_block section and subtract one quadlet from the length data saved at step 104.

At step 107, the controller 10 formulates a unicast Read Data Block (RDB) request packet (see Fig. 5C) for a target node by setting the saved identifier of the node in the destination ID field of the packet, the summed address value in the destination_offset field and the subtracted length data in the data_length field, the packet being forwarded onto all local buses (step 108) so that only one node specified by the destination ID field knows that it is being targeted.

In response to the RDB request packet, the target node replies with a RDB response packet (Fig. 5D) by setting its data field with bus_info_block section data that begins with the second address location specified by the request packet.

Upon receipt of the RDB response packet from a target node (step 109), the controller 10 proceeds to step 110 to establish a correspondence in the mapping table 15 between the target node identifier and the bus_info_block section data contained in the response packet.

At step 111, the controller 10 checks to see if RDB response packets are received from all target nodes. If not, flow returns to step 106 to repeat the process until RDB response packets are received from all target nodes.

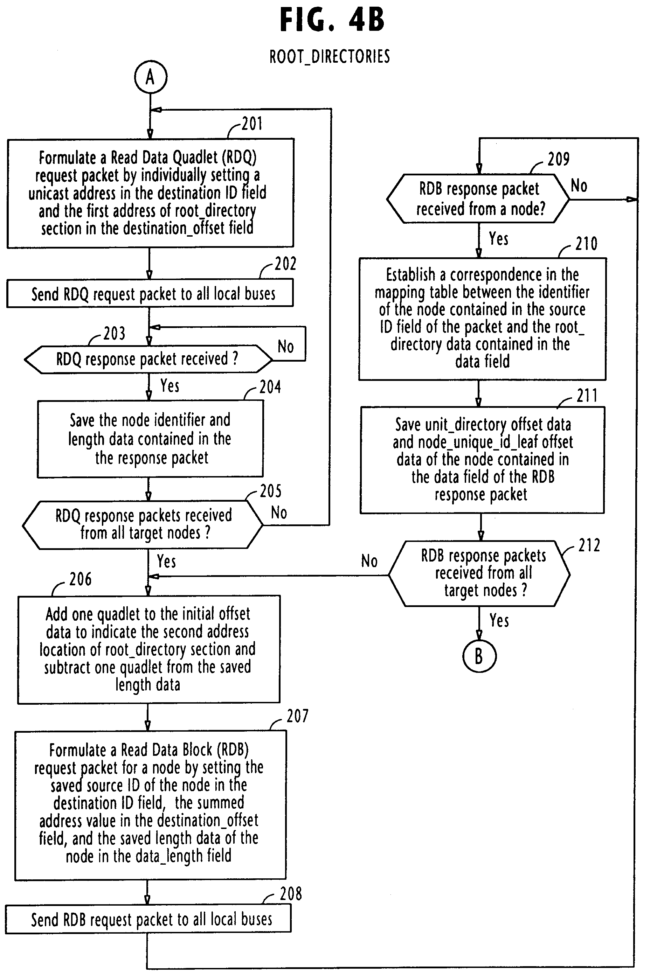

Following the affirmative decision at step 111, flow proceeds to step 201 (Fig. 4B) to start reading root_directory section data from the target nodes in a manner similar to the routine of Fig. 4A by formulating a unicast RDQ request packet. In this unicast request packet all-bus address 3FF₁₆ is set in the ten most significant bits of the destination ID field and an individual address is set in the six least significant bits similar to step 101 and the first address (FFFFF0000414₁₆) of the root_directory section is set in the destination_offset field.

The RDQ request packet is forwarded to all local buses (step 202) so that all nodes know that they are being targeted and reply with RDQ response packets each containing the data length of the root_directory section in its quadlet data field.

Upon receipt of the RDQ response packet from each target node (step 203), the controller 10 proceeds to step 204 to save the source identifier and the length data of the root_directory section.

At step 205, the controller 10 checks to see if RDQ response packets are received from all target nodes. If not, the flow returns to step 201 to repeat the process until RDQ response packets are received from all target nodes.

When the decision at step 205 becomes affirmative, flow proceeds to step 206 to add one quadlet to the initial offset data to produce a summed address indicating the second address location of the root_directory section and subtract one quadlet from the length data saved at step 204.

At step 207, the controller 10 formulates a unicast RDB request packet for a target node by setting the saved identifier of the node in the destination ID field of the packet, the summed address value in the destination_ offset field and the subtracted length data in the data_length field. The packet is forwarded onto all local buses (step 208) so that only one node specified by the destination ID field knows that it is being targeted.

In response to the RDB request packet, the target node replies with a RDB response packet containing in its data field root_directory section data that begins with the second address location specified by the request packet.

Upon receipt of the RDB response packet from a target node (step 209), the controller 10 proceeds to step 210 to establish a correspondence in the mapping table 15 between the identifier of the target node and the root_directory section data contained in the response packet.

At step 211, the controller saves the unit_directory offset data and node_unique_id_leaf offset data contained in the data field of the response packet, and proceeds to step 212 to check to see if RDB response packets are received from all target nodes. If not, flow returns to step 206 to repeat the process until RDB response packets are received from all target nodes.

Following the affirmative decision at step 212, flow proceeds to step 301 (Fig. 4C) to start reading the unit_directory section data from each target node by formulating a unicast RDQ request packet. In this unicast request packet the identifier of a node saved at step 211 is set in the destination ID field and the unit_directory offset data saved at step 211 is set in the destination_offset field. The unicast packet is forwarded onto the local buses at step 302, so that only one node knows that it is being targeted. The target node replies with a RDQ response packet containing the length data of the unit_directory section.

When the controlling node 1 receives the RDQ response packet (step 303), flow proceeds to step 304 to save the node identifier and length data and proceeds to step 305 to check to see if RDQ response packets are received from all target nodes. If not, flow returns to step 301 to repeat the process until RDQ response packets are received from all target nodes.

When the decision at step 305 becomes affirmative, flow proceeds to step 306 to add one quadlet to the unit_directory offset data of a given node saved at step 304 to specify the second address location of unit_directory section and subtract one quadlet from the length data saved at step 211.

At step 307, the controller 10 formulates a RDB request packet for the given node by setting its saved identifier in the destination ID field, summed address in the destination_offset field and the subtracted length data in the data_length field. At step 308, the RDB request packet is forwarded onto the local buses.

In response to the RDB request packet, the given target node replies with a RDB response packet containing in its data field unit_directory section data,

When the controller 10 receives the RDB response packet at step 309, it proceeds to step 310 to establish a correspondence in the mapping table 15 between the identifier of the given node and the unit_directory section data contained in the packet. At step 311, the controller 10 checks to see if RDB response packets are received from all target nodes. If not, steps 306 to 310 are repeated until RDB response packets are received from all nodes.

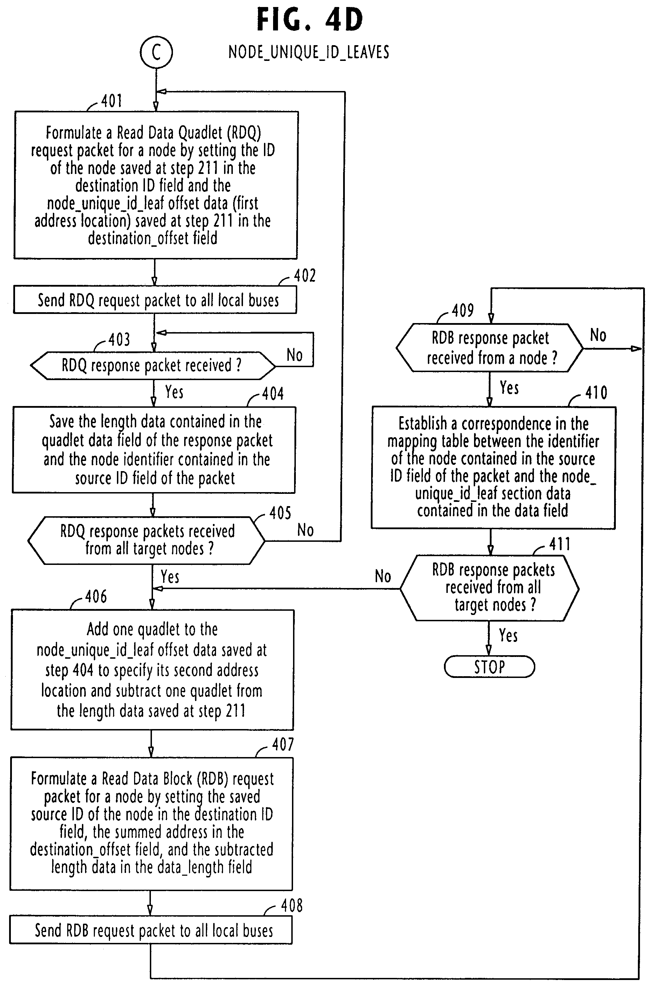

Following the affirmative decision at step 311, flow proceeds to step 401 (Fig. 4D) to start reading node_unique_ id_leaf section data from each target node by formulating a unicast RDQ request packet. In this unicast request packet the identifier of a node saved at step 211 is set in the destination ID field and the node_unique_id_leaf offset data saved at step 211 is set in the destination_offset field. The unicast packet is forwarded onto the local buses at step 402, so that only one node knows that it is being targeted. The target node replies with a RDQ response packet containing the length data of the node_unique_id_leaf section.

In response to receipt of the RDQ response packet (step 403), flow proceeds to step 404 to save the node identifier and length data and proceeds to step 405 to check to see if RDQ response packets are received from all target nodes. If not, flow returns to step 401 to repeat the process until RDQ response packets are received from all target nodes,

When the decision at step 405 becomes affirmative, flow proceeds to step 406 to add one quadlet to the node_unique_id_leaf offset data of a given node saved at step 404 to specify the second address location of node_unique_id_leaf section and subtract one quadlet from the length data saved at step 211.

At step 407, the controller 10 formulates a RDB request packet for the given node by setting its saved identifier in the destination ID field, summed address in the destination_offset field and the subtracted length data in the data_length field. At step 408, the RDB request packet is forwarded onto the local buses.

In response to the RDB request packet, the given target node replies with a RDB response packet containing in its data field node_unique_id_leaf section data.

When the controller 10 receives the RDB response packet at step 409, it proceeds to step 410 to establish a correspondence in the mapping table 15 between the identifier of the given node and the unit_directory section data contained in the packet. At step 411, the controller 10 checks to see if RDB response packets are received from all target nodes. If not, steps 406 to 410 are repeated until RDB response packets are received from all nodes, whereupon all routines of the table mapping process is terminated.

With the mapping table 15 being completed as shown in Fig. 1, the controlling node 1 starts a process for establishing a connection between two audio/visual nodes.

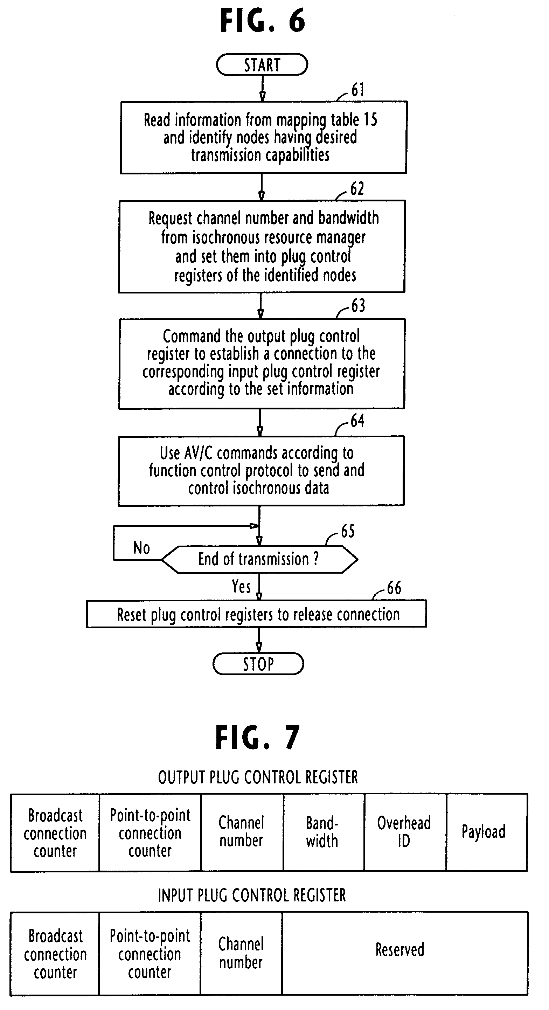

As shown in Fig. 6, the connection establishment process begins with step 61 in which the controller 10 reads information from all entries of the mapping table 15 and identifies nodes having isochronous transmission capabilities. At step 62, the controller 10 sends an asynchronous lock packet to the isochronous resource manager to request the use of a bandwidth. If the request is granted, the isochronous resource manager returns a response packet indicating a channel number and a bandwidth, The controller 10 sets the requested information and other necessary information into the input and output plug control registers of the identified nodes as shown in Fig. 7 according to the IEC-61883 standard. At step 63, the controller 10 commands the output plug control register to establish a connection to the input plug control register according to the set information. In this way, an isochronous channel is established between audio/visual nodes for transmission of isochronous data.

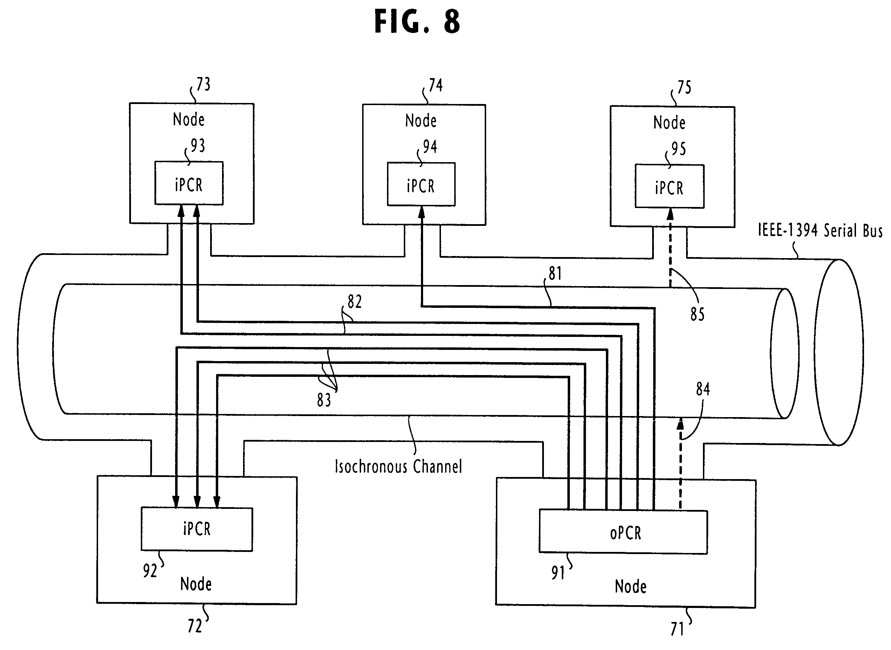

Fig. 8 shows one example of connections established among audio/visual nodes of the present invention. It is seen that a plurality of connections are established on a single isochronous channel. One point-to-point connection 81 is established between the output plug control register 91 of node 71 and the input plug control register 95 of node 75, two point-to-point connections 82 are established between the output PCR 91 and the input PCR 93 of node 73, and three point-to-point connections 83 are established between the output PCR 91 and the input PCR 92 of node 72. Additionally, a broadcast-out connection 84 is established between the output PCR 91 and the broadcast channel number of the isochronous channel and a broadcast-in connection 85 is established between the input PCR 95 and the broadcast channel number, These broadcast connections are established independently of the operating states of the transmit and receive nodes. The plug control registers of the broadcast connections can be rewritten from any other nodes of the network, so that an established broadcast connection can be cleared and the ownership of the connection be transferred to another node.

With a connection being established between two audio/visual nodes, start/stop, pause and slow-motion commands (AV/C commands) are used to control video program transmissions according to the function control protocol (FCP) of the IEC-61883 standard (step 64). At the end of the isochronous transmission (step 65), the input and output plug control registers of the audio/visual nodes are reset to release the connection (step 66).

## Claims

1. A node attached to an IEEE-1394 serial bus for controlling devices attached to said bus, each of said devices including a configuration ROM and identified by an identifier, said node comprising:
a mapping cable; and
control circuitry for reading information from the configuration ROM of each of said devices and mapping the identifier of the device to the read information in said mapping table, identifying a device having required capabilities according to information stored in said mapping table, requesting an isochronous resource manager to obtain information necessary for transmission of isochronous data, and setting the obtained information into said identified device to establish a connection which supports said transmission.

2. An IEEE-1394 serial bus system in which a plurality of nodes are attached to the serial bus, each of said nodes including a configuration ROM and identified by a node identifier, at least one of said nodes comprising:
a mapping table; and
control circuitry for reading information from the configuration ROM of each of other nodes and mapping the identifier of each other node to the read information in said mapping table, identifying a node having required node capabilities according to information stored in said mapping table, requesting an isochronous resource manager to obtain information necessary for transmission of isochronous data, and setting the obtained information into said identified node to establish a connection which supports said transmission.

3. A method for establishing a connection between ones of a plurality nodes attached to an IEEE-1394 serial bus, each of said nodes including a configuration ROM and identified by a node identifier, comprising the steps of:
a) reading information from the configuration ROM of each of said nodes and mapping the identifier of the node to the read information in a mapping table;
b) identifying a node having required node capabilities according to information stored in said mapping table;
c) requesting an isochronous resource manager to obtain information necessary for transmission of isochronous data; and
d) establishing a connection to said identified node according to the obtained information.

4. The method of claim 3, wherein the step (a) comprises the steps of:
reading a data quadlet from the configuration ROM of each node; and
reading a data block from a location of the configuration ROM of the node which is specified by said data quadlet and mapping the data block to the node identifier of the node in said mapping table.

5. The method of claim 3, wherein the step (a) comprises the steps of:
transmitting a read data quadlet (RDQ) unicast request packet to the serial bus indicating a storage location of a data quadlet and receiving a (RDQ) response packet from each of said nodes indicating the data length of a data block following said data quadlet; and
transmitting a read data block (RDB) unicast request packet to the serial bus indicating said data length and a storage location of said data block and receiving a RDB response packet from each node so that said data block is obtained from the configuration ROM of the node and mapping the obtained data block to the node identifier of the node in said mapping table.

6. The method of claim 3, wherein said identified node includes a plug control register, wherein step (b) comprises:
reading data from the mapping cable to identify ones of said nodes having required node capabilities;
requesting an isochronous resource manager to obtain information necessary for transmission of isochronous data;
setting the obtained information into the plug control register of said identified node; and
establishing a connection according to the information set in said plug control register.
